(19) Europäisches Patentamt
European Patent Office
Office européen des brevets

(11) **EP 4 106 269 B1**

(12) **EUROPEAN PATENT SPECIFICATION**

(45) Date of publication and mention
of the grant of the patent:
**03.09.2025 Bulletin 2025/36**

(21) Application number: **22178350.9**

(22) Date of filing: **10.06.2022**

(51) International Patent Classification (IPC):
$H04L\ 9/40^{(2022.01)}$   $G06N\ 3/045^{(2023.01)}$
$G06N\ 3/047^{(2023.01)}$   $H04L\ 12/12^{(2006.01)}$
$G06N\ 3/08^{(2023.01)}$

(52) Cooperative Patent Classification (CPC):
**H04L 63/1425; G06N 3/045; G06N 3/047;
G06N 3/08; H04L 12/12**

(54) **METHOD AND APPARATUS FOR DETECTING ATTACK IN CAN BUS**

VERFAHREN UND VORRICHTUNG ZUM DETEKTIEREN EINES ANGRIFFS IN EINEM CAN-BUS

PROCÉDÉ ET APPAREIL DE DÉTECTION D'UNE ATTAQUE DANS UN BUS CAN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2021 KR 20210078080
23.05.2022 KR 20220062705**

(43) Date of publication of application:
**21.12.2022 Bulletin 2022/51**

(73) Proprietor: **Autocrypt Co., Ltd.
Seoul 07241 (KR)**

(72) Inventors:
• **JOO, Ki Ho**
**Seoul 04421 (KR)**
• **PARK, Seung Young**
**Chuncheon-si 24432 (KR)**
• **SIM, Sang Gyoo**
**Seoul 06939 (KR)**
• **KIM, Eui Seok**
**Seoul 03730 (KR)**
• **KIM, Duk Soo**
**Seoul 03747 (KR)**
• **LEE, Seok Woo**
**Seoul 04604 (KR)**
• **LEE, Jung Won**
**Seongnam-si 13643 (KR)**

(74) Representative: **Stöckeler, Ferdinand
Schoppe, Zimmermann, Stöckeler
Zinkler, Schenk & Partner mbB
Patentanwälte
Radlkoferstrasse 2
81373 München (DE)**

(56) References cited:
• **SONG HYUN MIN ET AL: "Self-Supervised
Anomaly Detection for In-Vehicle Network Using
Noised Pseudo Normal Data", IEEE
TRANSACTIONS ON VEHICULAR
TECHNOLOGY, IEEE, USA, vol. 70, no. 2, 12
January 2021 (2021-01-12), pages 1098 - 1108,
XP011841319, ISSN: 0018-9545, [retrieved on
20210309], DOI: 10.1109/TVT.2021.3051026**
• **HAIHUA CHEN ET AL: "Data Curation and Quality
Assurance for Machine Learning-based Cyber
Intrusion Detection", ARXIV.ORG, CORNELL
UNIVERSITY LIBRARY, 201 OLIN LIBRARY
CORNELL UNIVERSITY ITHACA, NY 14853, 20
May 2021 (2021-05-20), XP081967177**
• **DEBJIT PAUL ET AL: "COINS: Dynamically
Generating COntextualized Inference Rules for
Narrative Story Completion", ARXIV.ORG,
CORNELL UNIVERSITY LIBRARY, 201 OLIN
LIBRARY CORNELL UNIVERSITY ITHACA, NY
14853, 4 June 2021 (2021-06-04), XP081983981**

EP 4 106 269 B1

**Description**

**CROSS-REFERENCE TO RELATED APPLICATIONS**

This application claims priority to Korean Patent Applications No. 10-2021-0078080, filed on June 16, 2021, and No. 10-2022-0062705 filed on May 23, 2022 with the Korean Intellectual Property Office (KIPO).

**BACKGROUND**

**1. Technical Field**

The present disclosure relates to a method and an apparatus for intrusion detection in in-vehicle networks, and more particularly, to a method and an apparatus for intrusion detection on a controller area network (CAN) bus by using a generative pretrained transformer 2 (GPT2) deep learning network.

**2. Related Art**

The Controller area network (CAN) bus protocol has been introduced to support communication between various controllers in a vehicle by using a single common bus. However, because it is designed without consideration of security, it is exposed to the threat of various attacks. Since controllers connected to a CAN bus transmit periodic and aperiodic signals under a normal vehicle operation situation, if a sequence of CAN identifiers (IDs) is configured by collecting IDs of CAN signals in their order of occurrence, the sequence will have a certain pattern. Accordingly, when patterns of the CAN ID sequence in the normal operation situation are learned, a change in the pattern of CAN ID sequence due to the occurrence of an attack can be detected. However, when only a very small number of attack IDs are included in a detection target CAN ID sequence, it may be very difficult to detect the corresponding pattern change. Therefore, in order to detect an attack on the CAN bus, a detection technique different from the existing one is required.

Document "Self-Supervised Anomaly Detection for In-Vehicle Network Using Noised Pseudo Normal Data" by Hyun Min Song et al. discloses a self-supervised method for in vehicle networks (IVN) anomaly detection using noised pseudo normal data. The proposed method consists of two deep-learning models of the generator and the detector, which generates noised pseudo normal data and detects anomalies, respectively.

Document "Data Curation and Quality Assurance for Machine Learning-based Cyber Intrusion Detection" by Haihua Chen et al. initiates a data quality perspective for researchers and practitioners to improve the performance of machine learning-based intrusion detection, conducting experiments on 11 HIDS datasets using seven machine learning models and three deep learning models.

**SUMMARY**

The invention is set out in the appended set of claims

Accordingly, exemplary embodiments of the present disclosure are directed to providing a method and an apparatus for intrusion detection on a CAN bus by using a GPT2 deep learning network.

According to a first exemplary embodiment of the present disclosure, an intrusion detection method for a CAN, performed by a processor, may comprise: collecting CAN IDs from the CAN in an order of occurrence; generating a sequence of a predetermined number L of CAN IDs from the collected CAN IDs, $L$ being an integer greater than or equal to 1; and inputting the sequence into a bi-directional GPT2 network and calculating a value of a loss function corresponding to the sequence, wherein when a number of allowed CAN IDs is $K,$ the allowed CAN IDs in the sequence are sorted in an order of magnitude and converted into values 0 to $K$ - 1, CAN IDs that are not allowed in the sequence are converted to $K,$ the sequence is input to the bidirectional GPT2 network, and $K$ is an integer equal to or greater than 1.

The bi-directional GPT2 network may include a forward GPT module, a backward GPT module, and a fully-connected layer.

In the calculating of the value of the loss function, the sequence may be input to the forward GPT module in an original order, and the sequence may be input to the backward GPT module in a reverse order.

In the calculating of the value of the loss function, embedding vectors corresponding to CAN IDs from 0-th CAN ID to (L-2)-th CAN ID belonging to the sequence may be input to the forward GPT module, and the forward GPT module may output E-dimensional vectors having a same dimensionality as the embedding vectors, which correspond to 1st to (L-1)-th CAN IDs.

In the calculating of the value of the loss function, embedding vectors corresponding to CAN IDs from (L-1)-th CAN ID to 1st CAN ID belonging to the sequence may be input to the backward GPT module, and the backward GPT module may output E-dimensional vectors having a same dimensionality as the embedding vectors, which correspond to (L-2)-th to 0-th CAN IDs.

In the calculating of the value of the loss function, the output of the forward GPT module and the output of the backward GPT module may be concatenated to generate a $2E \times L$ matrix, the $2E \times L$ matrix may be converted to a $(K+1) \times L$ matrix by the fully-connected layer, and the $(K+1) \times L$ matrix may be transformed into a probability matrix by a softmax layer.

The loss function may be defined as

$$\text{NLL} = -\frac{1}{NL} \sum_{n=0}^{N-1} \sum_{l=0}^{L-1} \log \hat{\mathbb{P}} \left( x_l^{(n)} = y_l^{(n)} \mid \left\{ x_{l'}^{(n)} \right\}_{l'=0, l' \neq l}^{(L-1)} \right)$$

, the forward GPT module, the backward GPT module, and the fully-connected layer may be trained to minimize the value of the loss function, $x_l^{(n)}$ is an l-th variable of an n-th normal CAN ID sequence used for training, and $y_l^{(n)}$ is an actual generated CAN ID for $x_l^{(n)}$, which is a ground truth value.

The intrusion detection method may further comprise: comparing the value of the loss function to a threshold; and when the value of the loss function is equal to or greater than the threshold, determining a period corresponding to the sequence as a period in which an intrusion exists, wherein the loss function may be defined as

$$\text{NLL}^{(m)} = -\frac{1}{L} \sum_{l=0}^{L-1} \log \hat{\mathbb{P}} \left( x_l^{(m)} = y_l^{(m)} \right)$$

, $x_l^{(m)}$ is an l-th variable of an m-th CAN ID sequence corresponding to a detection target sequence, and $y_l^{(m)}$ is an actual generated CAN ID for $x_l^{(m)}$, which is a ground truth value.

According to a second exemplary embodiment of the present disclosure, an intrusion detection apparatus for a CAN may comprise: a processor; a memory storing one or more instructions executable by the processor, and a transceiver connected to a bus of the CAN to perform communications, wherein when executed by the processor, the one or more instructions cause the intrusion detection apparatus to: collect CAN IDs from the CAN in an order of occurrence; generate a sequence of a predetermined number L of CAN IDs from the collected CAN IDs, L being an integer greater than or equal to 1; and input the sequence into a bi-directional GPT2 network and calculate a value of a loss function corresponding to the sequence, wherein when a number of allowed CAN IDs is K, the allowed CAN IDs in the sequence are sorted in an order of magnitude and converted into values 0 to K - 1, CAN IDs that are not allowed in the sequence are converted to K, the sequence is input to the bidirectional GPT2 network, and K is an integer equal to or greater than 1.

The bi-directional GPT2 network may include a forward GPT module, a backward GPT module, and a fully-connected layer.

In the calculating of the value of the loss function, the sequence may be input to the forward GPT module in an original order, and the sequence may be input to the backward GPT module in a reverse order.

In the calculating of the value of the loss function, embedding vectors corresponding to CAN IDs from 0-th CAN ID to (L-2)-th CAN ID belonging to the sequence may be input to the forward GPT module, and the forward GPT module may output E-dimensional vectors having a same dimensionality as the embedding vectors, which correspond to 1st to (L-1)-th CAN IDs.

In the calculating of the value of the loss function, embedding vectors corresponding to CAN IDs from (L-1)-th CAN ID to 1st CAN ID belonging to the sequence may be input to the backward GPT module, and the backward GPT module may output E-dimensional vectors having a same dimensionality as the embedding vectors, which correspond to (L-2)-th to 0-th CAN IDs.

In the calculating of the value of the loss function, the output of the forward GPT module and the output of the backward GPT module may be concatenated to generate a $2E \times L$ matrix, the $2E \times L$ matrix may be converted to a $(K+1) \times L$ matrix by the fully-connected layer, and the $(K+1) \times L$ matrix may be transformed into a probability matrix by a softmax layer.

The loss function may be defined as

$$\text{NLL} = -\frac{1}{NL} \sum_{n=0}^{N-1} \sum_{l=0}^{L-1} \log \hat{\mathbb{P}} \left( x_l^{(n)} = y_l^{(n)} \mid \left\{ x_{l'}^{(n)} \right\}_{l'=0, l' \neq l}^{(L-1)} \right)$$

, the forward

GPT module, the backward GPT module, and the fully-connected layer may be trained to minimize the value of the loss function, $x_l^{(n)}$ is an $l$-th variable of an n-th normal CAN ID sequence used for training, and $y_l^{(n)}$ is an actual generated CAN ID for $x_l^{(n)}$, which is a ground truth value.

The one or more instructions may further cause the intrusion detection apparatus to: compare the value of the loss function to a threshold; and when the value of the loss function is equal to or greater than the threshold, determine a period corresponding to the sequence as a period in which an intrusion exists, wherein the loss function may be defined as

$$\text{NLL}^{(m)} = -\frac{1}{L} \sum_{l=0}^{L-1} \log \hat{\mathbb{P}}\left(x_l^{(m)} = y_l^{(m)}\right)$$

, $x_l^{(m)}$ is an $l$-th variable of an m-th CAN ID sequence corresponding to a detection target sequence, and $y_l^{(m)}$ is an actual generated CAN ID for $x_l^{(m)}$, which is a ground truth value.

When using the method and apparatus for detecting an attack on a CAN bus using the bi-directional GPT2 network proposed by the present disclosure, an attack can be effectively detected even when a small number of attack IDs are included in a CAN ID sequence. Accordingly, security of an in-vehicle network on which the CAN bus is mounted can be improved.

## BRIEF DESCRIPTION OF DRAWINGS

FIG. 1 is a conceptual diagram illustrating a structure of a general CAN data frame.

FIG. 2 is a conceptual diagram for describing a problem of the current connection structure of CAN.

FIG. 3 is a conceptual diagram for describing a conventional method of converting a CAN ID into a binary number, and performing intrusion detection by regarding it as a binary image.

FIG. 4 is a conceptual diagram illustrating a signal flow in a GPT2 network.

FIG. 5 is a conceptual diagram for describing a concept of masked self-attention applied to a GPT2 network.

FIG. 6 is a block diagram illustrating a structure of a bi-directional GPT2 network according to an exemplary embodiment of the present disclosure.

FIG. 7 is a flowchart illustrating a training procedure of a bi-directional GPT2 network for intrusion detection on a CAN bus according to an exemplary embodiment of the present disclosure.

FIG. 8 is a flowchart for describing a procedure for calculating a value of a loss function by a bi-directional GPT2 network according to an exemplary embodiment of the present disclosure.

FIG. 9 is a flowchart for describing an intrusion detection procedure using a bi-directional GPT2 network for intrusion detection on a CAN bus according to an exemplary embodiment of the present disclosure.

FIG. 10 is a block diagram for describing a configuration of an intrusion detection apparatus according to an exemplary embodiment of the present disclosure.

FIG. 11 is a graph illustrating an empirical cumulative density function (ECDF) of the injection intervals of attack CAN IDs.

FIG. 12 is a graph illustrating an ECDF regarding the number of attack IDs within one CAN ID sequence for L = 256.

FIG. 13 is a graph illustrating an ROC performance of the proposed method for spoofing attacks as a function of $L$ to determine the most suitable length L of a CAN ID sequence.

FIG. 14 is a graph illustrating an ECDF of the NLL values for attacks with L = 256.

FIG. 15 is a graph comparing the ROC performance for spoofing attacks of the intrusion detection methods with L = 256.

## DETAILED DESCRIPTION OF THE EMBODIMENTS

Embodiments of the present disclosure are disclosed herein. However, specific structural and functional details disclosed herein are merely representative for purposes of describing embodiments of the present disclosure. Thus, embodiments of the present disclosure may be embodied in many alternate forms and should not be construed as limited to embodiments of the present disclosure set forth herein.

Accordingly, while the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

The CAN bus protocol is a standard communication protocol designed for efficient communication between electronic control units (ECUs) without a host computer in the vehicle. Developed in 1983 by Bosch, the CAN bus protocol was established as the ISO 11898 standard in 1993 because of its simple yet efficient structure. A CAN bus operates by means of a broadcasting method such that when one device transmits a message, every device connected to the bus can receive it. In this case, a CAN data frame composed of a CAN ID and the message is transmitted, and arbitrary devices connected to the CAN bus receive the CAN data frame corresponding to a specific CAN ID.

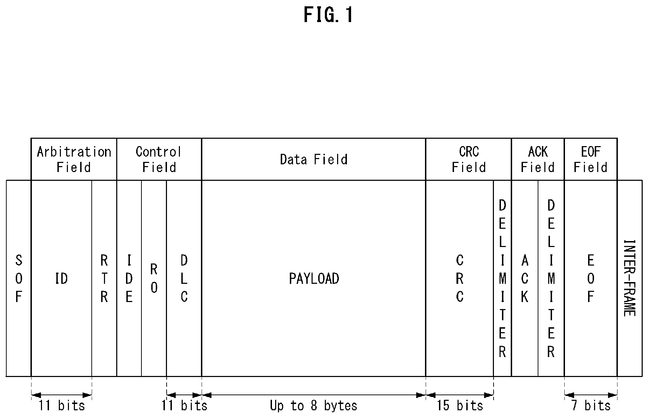

FIG. 1 is a conceptual diagram illustrating a structure of a general CAN data frame.

Referring to FIG. 1, a frame structure used in the CAN communication protocol may comprise a start of frame (SOF) field, identifier (ID) field, remote transmission request (RTR) field, control field, data field, cyclic redundancy check (CRC) field, acknowledgment (ACK) field, and end of frame (EOF) field. Since the ID field uses 11 bits, a maximum of 2,048 CAN IDs from 0x000 to 0x7FF can be supported. In addition, a transmission priority is determined according to the CAN ID value of the data frame, and the lower the ID value, the higher the transmission priority. Specifically, when ECUs using different CAN IDs transmit messages at the same time, a CAN ID transmitted by a transmitting ECU and CAN IDs transmitted by other ECUs are monitored through bit-level monitoring, and it may be identified whether another ECU transmits a message having a higher priority than a message of the transmitting ECU. Through this, an ECU that transmits a CAN data frame having a lower priority can detect that a CAN data frame having a higher priority is being transmitted during a CAN ID transmission period, and wait until the transmission of the CAN data frame having a higher priority is completed, thereby transmitting its own message without collision.

The CAN bus protocol was developed without encryption or authentication features because no consideration was given to security at the time of its development. Since many devices, such as Bluetooth devices, 3rd generation/4th generation (3G/4G) devices, Wi-Fi devices, wireless communication sensors, global positioning system (GPS) receivers, and vehicle controllers, as well as ECUs, may be connected in parallel to a single physical bus without consideration of security, ECUs can be easily attacked from the outside.

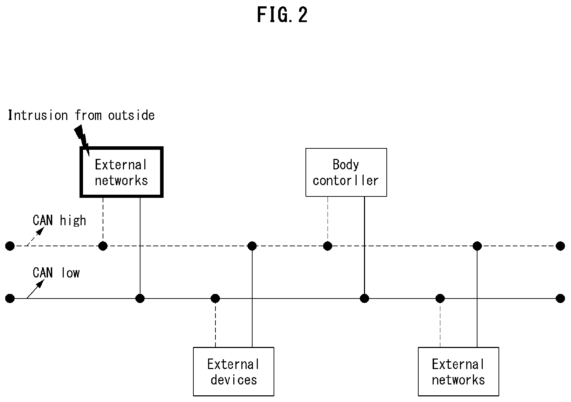

FIG. 2 is a conceptual diagram for describing a problem of the current connection structure of CAN.

Referring to FIG. 2, a situation is exemplified in which ECUs for controlling a speed and direction, which are critical to safety, are connected through one CAN bus along with external devices that control universal serial bus (USB) and Wi-Fi communication. If an attacker can access the CAN bus by gaining control of the devices responsible for external communication, it can interfere with the normal operation of the ECUs by transmitting malicious messages or saving normal frames and retransmitting them. Moreover, some ECUs can be shut down by transmitting repetitive error messages, and intentional accidents can be caused by changing the information about the driving direction and velocity of a vehicle. Such attacks are possible because the CAN data frame does not include information of a sender and thus is easily spoofed.

Under normal circumstances, CAN IDs are generated in a specific order on the CAN bus, and CAN data frames to which CAN IDs generated in a specific order are assigned are transmitted. If there is an attack from the outside, there will be a change in the order of occurrence of CAN IDs with a very high probability. In the existing studies, intrusion detection methods of converting a sequence of CAN IDs into an image and applying a generative adversarial network (GAN) structure-based unsupervised learning or a convolutional neural network (CNN) structure-based supervised learning have been proposed. However, the existing studies have the following problem. Although the sequence of CAN IDs is a permutation of integer values, the existing studies detect a change in the order of occurrence of CAN IDs in an indirect manner through conversion into an image. For example, in the existing studies, if a non-existent (i.e., not-allowed) CAN ID looks almost similar to an existing (i.e., allowed) CAN ID on the image, it may not be detected.

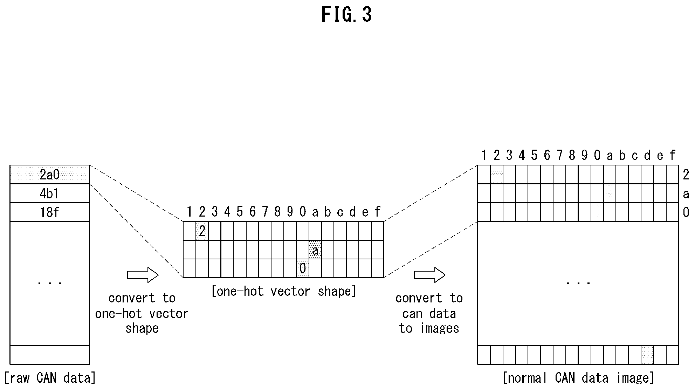

FIG. 3 is a conceptual diagram for describing a conventional method of converting a CAN ID into a binary number, and performing intrusion detection by regarding it as a binary image.

As shown in FIG. 3, in the existing study, an attack is detected by converting a CAN ID into a binary number and recognizing the converted binary number as a binary image. However, in this case, an attack is detected only by a change in the order of occurrence of CAN IDs. Even if only one of the bits constituting the CAN ID is changed, it may not be an allowed CAN ID, but it may not be detected well.

In order to solve the above-described problem, the present disclosure proposes a method and an apparatus for detecting an attack on a CAN bus using a Generative Pretrained Transformer 2 (GPT2) deep learning structure used to generate a sentence through natural language learning. In particular, the present disclosure proposes a method and an apparatus using two GPT modules combined in a bi-directional manner so that both past and future CAN IDs relative to a time of detection can be used.

The GPT2 is a deep learning structure that generates a sentence through natural language learning. In the training process of GPT2, given a sentence, each word constituting the sentence is converted into an integer value corresponding to a searched word from a pre-generated corpus. After the converted integer is converted into an embedding vector, it is sequentially input to a transformer, and the transformer predicts the next word of the input word. The GPT2 network may be trained to minimize a cross entropy between the predicted word and a real word. The GPT2 network, which has undergone the above-described training process, can predict the next word that will appear with the highest probability among the words existing in the corpus with respect to the input word. In addition, when the predicted word is inputted to the GPT2 network again, the next word can be predicted, so that the generation of a sentence is possible. The GPT2 network can be used for writing articles by using such the sentence generation function.

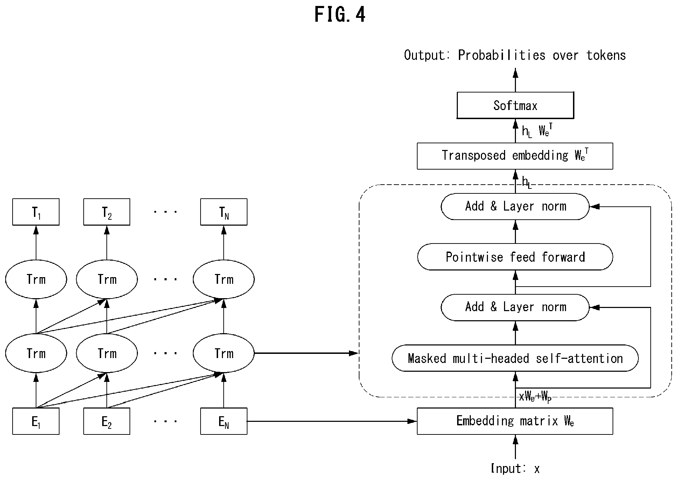

FIG. 4 is a conceptual diagram illustrating a signal flow in a GPT2 network.

Referring to FIG. 4, when word tokens each of which is converted into an embedding vector $E_i$ are sequentially input to a transformer, a probability of a word appearing after the corresponding words is output in the final layer.

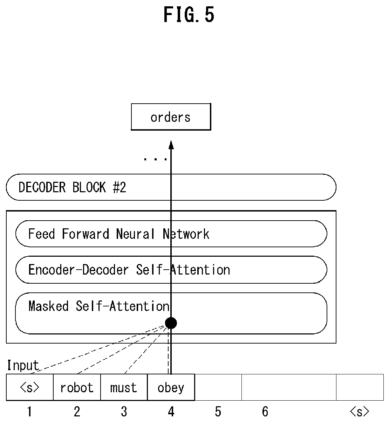

FIG. 5 is a conceptual diagram for describing a concept of masked self-attention applied to a GPT2 network.

Referring to FIG. 5, since the GPT2 processes all words input at once in parallel, if no action is taken, information about words that will appear later may be used to predict the next word. To solve this problem, a masked self-attention technique is used. That is, in order to predict the next word, a mask is used to use only information on words input up to just before. This masked self-attention technique can be applied in a process in which sequences of CAN IDs are input to GPT2 modules, which will be described later.

## Training procedure for intrusion detection

Hereinafter, a structure of a bi-directional GPT2 network for performing an intrusion detection method on a CAN bus according to an exemplary embodiment of the present disclosure and a training procedure for intrusion detection using the same will be described.

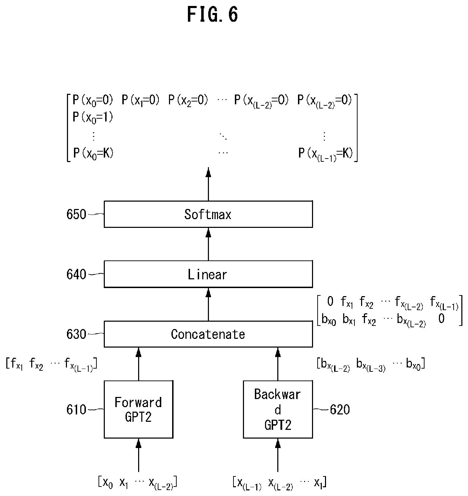

FIG. 6 is a block diagram illustrating a structure of a bi-directional GPT2 network according to an exemplary embodiment of the present disclosure.

Referring to FIG. 6, the bi-directional GPT2 network may be configured with a forward GPT module 610, a backward GPT module 620, a concatenation unit 630, a linear layer 640 which is a fully-connected layer, a softmax function (or layer) 650, and the like. The bi-directional GPT2 network may be trained before being loaded into a CAN bus intrusion detection apparatus of the present disclosure. Hereinafter, a training procedure of the bi-directional GPT2 network will be described.

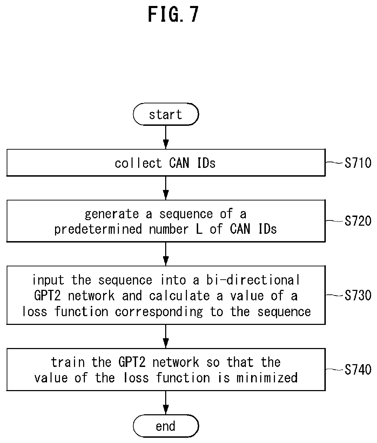

FIG. 7 is a flowchart illustrating a training procedure of a bi-directional GPT2 network for intrusion detection on a CAN bus according to an exemplary embodiment of the present disclosure.

First, CAN IDs of CAN data frames received on a CAN bus may be collected in the order of occurrence (S710). A CAN ID sequence composed of a predetermined number $L$ ($L$ is an integer greater than or equal to 1) of CAN IDs may be generated from the collected CAN IDs (S720).

In this case, when the number of allowed CAN IDs is $K$ ($K$ is an integer greater than or equal to 1), the allowed CAN IDs in the sequence may be sorted in an order of magnitude and converted into values 0 to K-1, and all CAN IDs, which are not allowed, in the sequence may be converted to K.

For example, if the allowed CAN IDs are 0x003, 0x008, 0x010, and 0x013 when K=4, they may be converted to 0, 1, 2, and 3, respectively. Accordingly, each of the allowed CAN IDs among the CAN IDs collected in step S710 may be converted to one of 0 to K-1. On the other hand, all of CAN IDs that are not allowed among the CAN IDs collected in step S710 may be converted to an integer value K. For example, all disallowed CAN IDs (e.g., 0x000, 0x015) included in the sequence may be converted to 4.

Then, the CAN ID sequence may be input to the bi-directional GPT2 network, and a value of a loss function corresponding to the sequence may be calculated (S730).

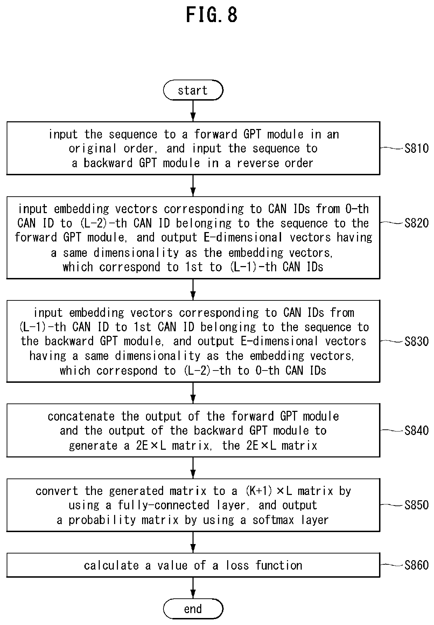

FIG. 8 is a flowchart for describing a procedure for calculating a value of a loss function by a bi-directional GPT2 network according to an exemplary embodiment of the present disclosure.

Referring to FIG. 8, the sequence of step S720 may be input to the forward GPT module 610 in an original order, and may be input to the backward GPT module 620 in a reverse order (S810).

Specifically, the sequence of $L$ CAN IDs may be input to the forward GPT module 610 in an original order. In addition, the sequence of $L$ CAN IDs may be input to the backward GPT module 620 in a reverse order. More specifically, as shown in Equation 1 below, embedding vectors corresponding to CAN IDs from the 0-th CAN ID to (L-2)-th CAN ID belonging to the sequence may be input to the forward GPT module 610, and E-dimensional vectors corresponding to CAN IDs from the first CAN ID to (L-1)-th CAN ID may be output (S720).

[Equation 1]

$$\begin{bmatrix} x_0 & x_1 & \cdots & x_{(L-2)} \end{bmatrix} \xrightarrow{\text{forward GPT2}} \begin{bmatrix} \mathbf{f}_{x_1} & \mathbf{f}_{x_2} & \cdots & \mathbf{f}_{x_{(L-1)}} \end{bmatrix}$$

In addition, as shown in Equation 2 below, embedding vectors corresponding to CAN IDs from the (L-1)-th CAN ID to first CAN ID belonging to the sequence may input to the backward GPT module 620 in a reverse order of occurrence, and E-dimensional vectors corresponding to CAN IDs from the 0-th CAN ID from (L-2)-th CAN ID may be output (S730).

[Equation 2]

$$\begin{bmatrix} x_{L-1} & x_{L-2} & \cdots & x_1 \end{bmatrix} \xrightarrow{\text{backward GPT2}} \begin{bmatrix} \mathbf{b}_{x_{(L-2)}} & \mathbf{b}_{x_{(L-3)}} & \cdots & \mathbf{b}_{x_0} \end{bmatrix}$$

Here, each of $f_{x_i}$ and $b_{x_i}$ may a E-dimensional vector having a dimensionality equal to the dimensionality of the embedding vector. Accordingly, the output of the forward GPT module and the output of the backward GPT module may be matrixes having a size $E \times (L-1)$, respectively.

The output of the forward GPT module 610 and the output of the backward GPT module 620 may concatenated through the concatenation unit 630 to generate a $2E \times L$ matrix as shown in Equation 3 below (S840).

[Equation 3]

$$\begin{bmatrix} \mathbf{0} & \mathbf{f}_{x_1} & \mathbf{f}_{x_2} & \cdots & \mathbf{f}_{x_{(L-2)}} & \mathbf{f}_{x_{(L-1)}} \\ \mathbf{b}_{x_0} & \mathbf{b}_{x_1} & \mathbf{b}_{x_2} & \cdots & \mathbf{b}_{x_{(L-2)}} & \mathbf{0} \end{bmatrix}$$

Here, the output of the backward GPT module 620 may be converted back to the reverse order to match the output order of the forward GPT module 610, and zero-vectors 0 may be inserted to generate a matrix of $2E \times L$ size.

The matrix of Equation 3 may be input to the fully-connected layer 640, may be converted to a matrix having a size of $(K+1) \times L$, and may be output as a probability matrix of Equation 4 below through a softmax layer (S850). Here, the probability matrix may be matrix representing a probability that each of the CAN IDs constituting the sequence is 0, one of the allowed CAN IDs converted to integer values (i.e., 0 to K-1), or one of the not-allowed CAN IDs (i.e., $K$).

[Equation 4]

$$\begin{bmatrix} \hat{\mathbb{P}}(x_0 = 0) & \hat{\mathbb{P}}(x_1 = 0) & \hat{\mathbb{P}}(x_2 = 0) & \cdots & \hat{\mathbb{P}}(x_{(L-2)} = 0) & \hat{\mathbb{P}}(x_{(L-1)} = 0) \\ \hat{\mathbb{P}}(x_0 = 1) & & & & & \\ \vdots & & & \ddots & & \vdots \\ \hat{\mathbb{P}}(x_0 = K) & & & \cdots & & \hat{\mathbb{P}}(x_{(L-1)} = K) \end{bmatrix}$$

The loss function of Equation 5 below may be calculated using the probability matrix (S860). Referring back to FIG. 7, training for the forward GPT module 610, the backward GPT module 620, and the fully-connected layer 630 may be performed to minimize Equation 5 (i.e., loss function) below (S740).

[Equation 5]

$$\text{NLL} = -\frac{1}{LM} \sum_{m=0}^{M-1} \sum_{l=0}^{L-1} \log \hat{\mathbb{P}}\left(x_l^{(m)} = y_l^{(m)}\right)$$

Here, $x_l^{(n)}$ is the $l$-th variable of the n-th normal CAN ID sequence used for training, and $y_l^{(n)}$ is a CAN ID actually generated for $x_l^{(n)}$ (i.e., a ground truth value).

**Intrusion detection procedure**

Hereinafter, an intrusion detection procedure for a CAN bus using a bi-directional GPT2 network according to an exemplary embodiment of the present disclosure will be described. In the intrusion detection, the bi-directional GPT2 network trained by the training procedure described above may be used. Basically, the intrusion detection procedure using the bi-directional GPT2 network may be similar to the training procedure described above.

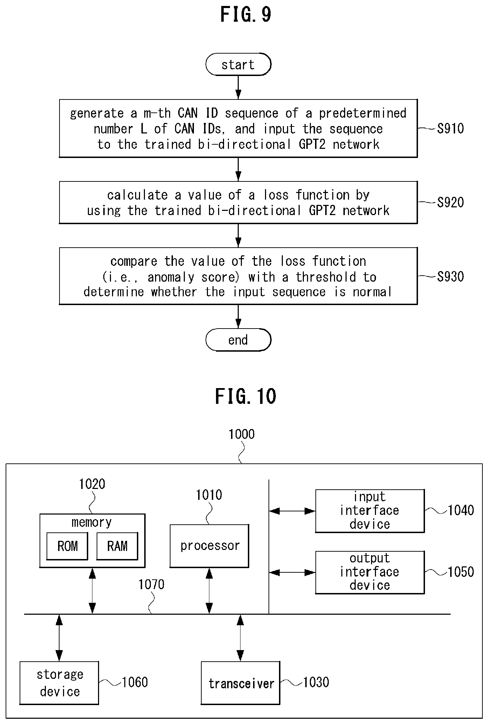

FIG. 9 is a flowchart for describing an intrusion detection procedure using a bi-directional GPT2 network for intrusion detection on a CAN bus according to an exemplary embodiment of the present disclosure.

An $m$-th CAN ID sequence corresponding to a detection target period including a predetermined number $L$ of CAN IDs defined as in Equation 6 below may be input to the trained bi-directional GPT2 network (S910).

[Equation 6]

$$\mathbf{x}^{(m)} = \begin{bmatrix} x_m & x_{(m+1)} & \cdots & x_{(m+L-1)} \end{bmatrix}$$
$$= \begin{bmatrix} x_0^{(m)} & x_1^{(m)} & \cdots & x_{L-1}^{(m)} \end{bmatrix}$$

In this case, as in the training procedure described above, when the number of allowed CAN IDs is $K$ ($K$ is an integer greater than or equal to 1), the allowed CAN IDs in the sequence may be sorted in an order of magnitude and converted into values 0 to K-1, and all CAN IDs, which are not allowed, in the sequence may be converted to K. Then, the sequence may be input to the bi-directional GTP2 network.

For example, if the allowed CAN IDs are 0x003, 0x008, 0x010, and 0x013 when K=4, they may be converted to 0, 1, 2, and 3, respectively. Accordingly, each of the allowed CAN IDs among the CAN IDs collected in step S710 may be converted to one of 0 to K-1. On the other hand, all of CAN IDs that are not allowed among the CAN IDs collected in step S710 may be converted to an integer value K. For example, all disallowed CAN IDs (e.g., 0x000, 0x015) included in the sequence may be converted to 4.

In the trained bi-directional GPT2 network, a loss function of Equation 7 below may be calculated through steps S810 to S860 described above. Here, a value of the loss function defined by Equation 7 may be referred to as an 'anomaly score' in that it determines whether the input sequence is abnormal.

[Equation 7]

$$\mathsf{NLL}^{(m)} = -\frac{1}{L} \sum_{l=0}^{L-1} \log \hat{\mathbb{P}} \left( x_l^{(m)} = y_l^{(m)} \right)$$

Here, $x_l^{(m)}$ is the l-th variable of the m-th normal CAN ID sequence corresponding to the detection target period, and $y_l^{(m)}$ is a CAN ID actually generated for $x_l^{(m)}$ (i.e., a ground truth value).

By comparing the calculated anomaly score with a threshold value $T$, it may be determined whether the detection target sequence is normal (S930). Specifically, if the anomaly score is greater than the threshold $T$, the period corresponding to the detection target sequence is determined as a period in which an attack exists, and when the anomaly score is lower than the threshold $T$, the period corresponding to the detection target sequence is determined as a normal period.

Additionally, through a union of the determined periods, a final attack period I* may be determined as shown in Equations 8 to 10 below.

[Equation 8]

$$I^* = \bigcup_{m \in \mathcal{M}} I^{(m)}$$

[Equation 9]

$$I^{(m)} = [m, (m+L-1)]$$

[Equation 10]

$$\mathcal{M} = \left\{ m \,|\, \mathrm{NLL}^{(m)} > T \right\}$$

## Configuration of intrusion detection apparatus

The apparatus for intrusion detection on a CAN bus according to exemplary embodiments of the present disclosure may be a device connected to the CAN bus in the vehicle. For example, a head unit of the vehicle or a gateway of an in-vehicle network may operate as the intrusion detection apparatus. Alternatively, the head unit or gateway of the vehicle may be configured to include the intrusion detection apparatus. On the other hand, the intrusion detection apparatus may be implemented as a diagnostic device existing inside or outside the vehicle or may be included in the diagnostic device.

FIG. 10 is a block diagram for describing a configuration of an intrusion detection apparatus according to an exemplary embodiment of the present disclosure.

Referring to FIG. 10, an intrusion detection apparatus 1000 may comprise at least one processor 1010, a memory 1020, and a transceiver 1030 connected to a CAN bus for performing communications. Also, the intrusion detection apparatus 1000 may further comprise an input interface device 1040, an output interface device 1050, a storage device 1060, and the like. The respective components included in the intrusion detection apparatus 1000 may communicate with each other as connected through a bus 1070. However, the respective components included in the intrusion detection apparatus 1000 may be connected not to the common bus 1070 but to the processor 1010 through an individual interface or an individual bus. For example, the processor 1010 may be connected to at least one of the memory 1020, the transceiver 1030, the input interface device 1040, the output interface device 1050, and the storage device 1060 through dedicated interfaces.

The processor 1010 may execute a program stored in at least one of the memory 1020 and the storage device 1060. The processor 1010 may refer to a central processing unit (CPU), a graphics processing unit (GPU), or a dedicated processor on which methods in accordance with embodiments of the present disclosure are performed. Each of the memory 1020 and the storage device 1060 may be constituted by at least one of a volatile storage medium and a non-volatile storage medium. For example, the memory 1020 may comprise at least one of read-only memory (ROM) and random access memory (RAM).

The above-described bi-directional GPT2 network may be stored in the memory 1020 and/or the storage device 1060 in a trained state. Alternatively, the above-described bi-directional GPT2 network may be trained while being mounted on the intrusion detection apparatus 1000.

When the above-described bi-directional GPT2 network trained while being mounted on the intrusion detection apparatus 1000, the processor 1010 may execute instructions for performing the steps described with reference to FIGS. 7 and 8 to train the bi-directional GPT2 network.

In addition, the processor 1010 may determine whether a CAN ID sequence is normal by using the trained bi-directional GPT2 network by executing instructions for performing the steps described with reference to FIGS. 7 and 8.

## Performance evaluation

In order to verify the performance of the proposed intrusion detection method, CAN bus signals from the 2020 Hyundai Avante CN7 were collected and used. A normal CAN bus signal comprises a total of 90 valid CAN IDs. For training purposes, the vehicle was driven around downtown for approximately 1.8 hours, and approximately 15,900,000 CAN ID sequences were collected unless otherwise stated. For evaluation purposes, attacks were conducted for approximately 0.34 hours, and approximately 3,300,000 CAN ID sequences were obtained. In the process of collecting evaluation data, flooding, spoofing, replay, and fuzzing attacks were conducted as attacks on the target vehicle. The detailed methods of conducting the attacks were as follows. In the flooding attacks, approximately 154,200 instances of CAN ID '0×000', the ID with the highest priority, were injected into the CAN bus. In the spoofing attacks, 2 valid CAN IDs were selected from the group of suitable CAN IDs, and approximately 7,800 of them were injected. In the replay attacks, approximately 47,600 normal CAN bus signals were recorded for a set period of time, and they were then reinjected. In the fuzzing attacks, CAN IDs were randomly generated, and approximately 89,900 of them were injected. Table 1 summarizes the composition of the training and evaluation data.

[Table 1]

|  | Train Data | Test Data |
| --- | --- | --- |
| Recorded time (Hour) | 1.80 | 0.34 |
| Number of all CAN IDs | $1.59 \times 10^7$ | $3.3 \times 10^6$ |
| Number of normal CAN IDs | $1.59 \times 10^7$ | $3.0 \times 10^6$ |
| Number of flooding attacks | n/a | $1.542 \times 10^5$ |
| Number of spoofing attacks | n/a | $7.8 \times 10^3$ |
| Number of replay attacks | n/a | $4.76 \times 10^4$ |
| Number of fuzzing attacks | n/a | $8.99 \times 10^4$ |

Unless otherwise noted, the following settings were applied in the proposed method: CAN ID sequence length, L = 256; dimensionality of word and positional embedding vectors, E = 128; number of attention heads in the forward and backward GPT networks, H = 8; number of transformer decoder blocks in the forward and backward GPT networks, G = 6; and dropout probability in each layer, 0.1. Training was performed using only training data consisting of the aforementioned normal CAN bus signals. In this process, the minibatch size was set to 32, and training was performed for 10 epochs using the adaptive moment estimation (Adam) optimization algorithm. If one or more attack CAN IDs were identified to exist within a CAN ID sequence with a length of L in the evaluation process, this sequence was considered an attack sequence. Table 2 summarizes the hyperparameters of the proposed method.

[Table 2]

| Parameter | Value |
| --- | --- |
| Sequence length (L) | 256 |
| Dimensions of word embedding vector (E) | 128 |
| Number of multi-heads (H) | 8 |
| Number of layers (G) | 6 |

The true positive rate (TPR) and false positive rate (FPR) were used as metrics to evaluate the performance. The TPR is the ratio of the number of CAN ID sequences correctly determined to be attacks (i.e., true positives) to the total number of attack CAN ID sequences, and the FPR is the ratio of the number of CAN ID sequences falsely determined to be attacks (i.e., false positives) to the total number of normal CAN ID sequences. Furthermore, based on these performance metrics, the receiver operating characteristic (ROC) curve was used to visually illustrate the performance of intrusion detection apparatus utilizing various threshold values. The ROC curve is constructed by plotting the FPR and TPR values corresponding to each threshold value on the horizontal and vertical axes, respectively, of a two-dimensional graph. To compare the ROC performance of different methods, the area under the curve (AUC) was used. The AUC value was calculated by normalizing the area underneath the given ROC curve, resulting in an AUC value of 1 for perfect performance. A typical performance detector may exhibit various AUC values ranging between 0 and 1. Therefore, it may be deduced that the higher the AUC value of the detector under consideration is, the higher its performance. In addition, the F-measure, the harmonic mean of precision and recall (i.e., TPR) is defined as in Equation 11 below.

[Equation 11]

$$F = \frac{2}{\frac{1}{Precision} + \frac{1}{Recall}}$$

Here, the precision is the ratio of the number of actual attack CAN ID sequences to the total number of CAN ID sequences identified as attacks. A higher F-measure value is considered to correspond to a higher detection capability.

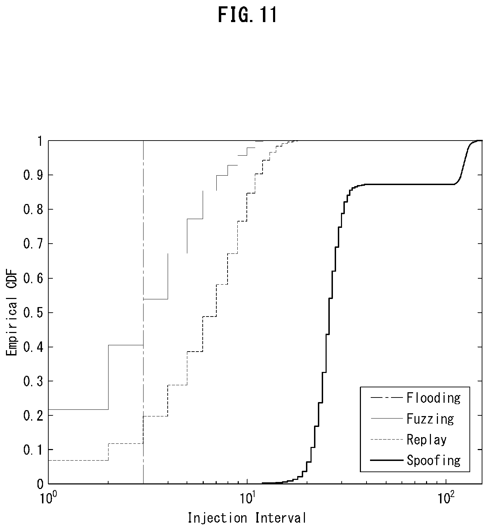

FIG. 11 is a graph illustrating an empirical cumulative density function (ECDF) of the injection intervals of attack CAN IDs.

For example, in the case of flooding attacks, the injection interval was set to 3, which means that one out of every three CAN data frames transmitted through the CAN bus originated from a flooding attack. For flooding, fuzzing, and replay attacks, we can see that most injection intervals of attack CAN IDs are below 10 due to the nature of these attacks. Therefore, these attacks are expected to be readily noticeable, leading to reasonable detection performance, as there will be a sufficient number of attack IDs even if the length of the CAN ID sequence, L, is not large. In contrast, spoofing attacks are conducted by using only 2 valid CAN IDs, meaning that the injection interval of attack IDs is relatively large. Specifically, approximately 12% of the spoofing attacks had an injection interval of more than 100. Therefore, when L = 100, approximately 12% of spoofing attacks will produce only one attack ID within the corresponding CAN ID sequence.

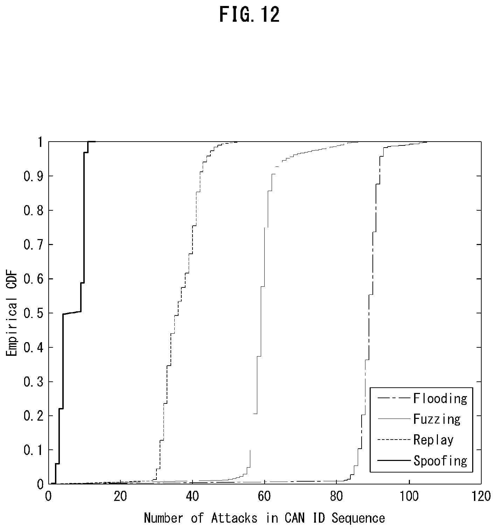

FIG. 12 is a graph illustrating an ECDF regarding the number of attack IDs within one CAN ID sequence for L = 256.

It can be seen that for spoofing attacks, very few attack IDs indeed exist within one CAN ID sequence, with a minimum of 1 to a maximum of 11. Specifically, in approximately 5% of all spoofing CAN ID sequences, 2 or fewer spoofing attacks are present. In other words, too few spoofing attacks appear in a substantial number of spoofing CAN ID sequences, which is expected to cause the detection performance to deteriorate for this type of attack.

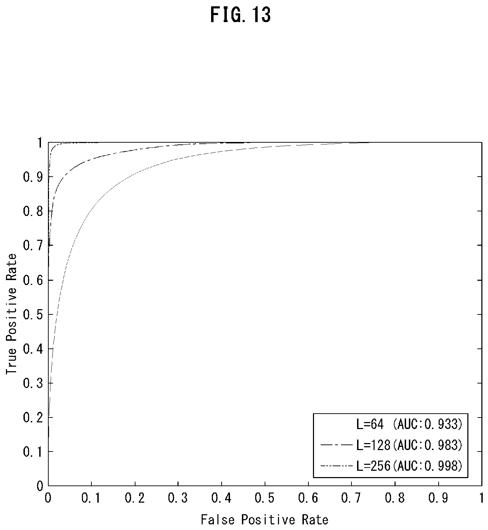

FIG. 13 is a graph illustrating an ROC performance of the proposed method for spoofing attacks as a function of *L* to determine the most suitable length L of a CAN ID sequence.

As predicted in the previous subsection, when L = 64 or 128, the number of spoofing attacks within a single sequence is too small, meaning that the detection performance is low. On the other hand, when L = 256, the detection performance is enhanced because two or more spoofing attacks are present per sequence in most cases. Furthermore, the AUC performance when L = 256 is higher by approximately 6.9% and 1.5%, respectively, than the cases of L = 64 and L = 128. Therefore, unless otherwise noted, L = 256 for all subsequent results.

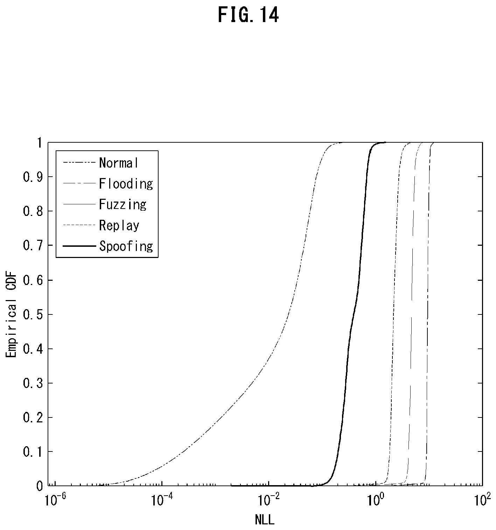

FIG. 14 is a graph illustrating an ECDF of the NLL values for attacks with L = 256.

In the cases of flooding, fuzzing, and replay attacks, the NLL value tends to be very large compared to its normal level because there are so many attack IDs within one CAN ID sequence. However, since spoofing attacks produce a relatively small number of attack IDs, the corresponding NLL value is lower.

Hereinafter, the performance of the proposed method will be compared with that of existing intrusion detection methods. The first intrusion detection method considered for comparison is the bi-directional Markov method, in which second-order Markov-chain models are combined in a bi-directional manner. In this method, the training data are used to estimate the second-order transition probability of a CAN ID sequence in the forward and backward directions, and this value can be used to calculate the log probability of the evaluated sequence to determine the attack status. To investigate the performance gain due to the bi-directional structure of the proposed method, in the second considered method, a GPT network is applied only in the forward direction (i.e., a uni-directional GPT network). Because this method uses only a one-way GPT network, the number of transformer decoder blocks in the uni-directional GPT network, G, is set to 12 to maintain a complexity similar to that of the proposed method. To compare the performance achieved with a GPT model to that of an LSTM model, the third considered method is a bidirectional LSTM method using two LSTM networks instead of GPT2 networks as used in the proposed method. In this method, word embedding vectors of the same dimensionality (E = 128) as in the proposed method are passed to the forward and backward LSTM networks, and each LSTM network with layer normalization is composed of a stack 6 LSTM cells with hidden state and cell state dimensions of 128.

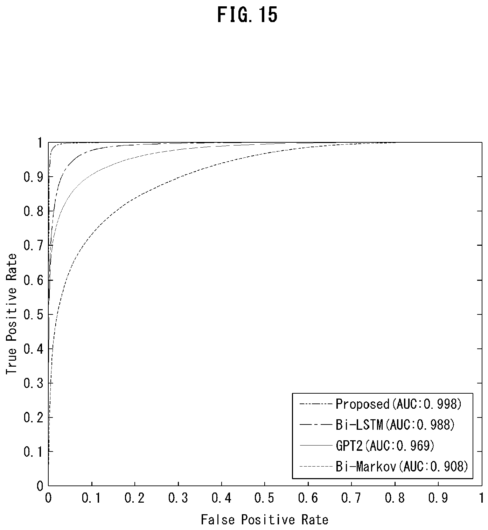

FIG. 15 is a graph comparing the ROC performance for spoofing attacks of the intrusion detection methods with L = 256.

As expected, the AUC performance of the proposed method is improved compared to the other methods. In particular, compared to the uni-directional GPT model, the proposed model combining GPT networks in both the forward and backward directions can achieve higher performance with the same degree of complexity. Additionally, the GAN-based method fails to detect spoofing attacks because the binary images converted from CAN ID sequences containing only a small number of spoofing attacks look very similar to those corresponding to normal CAN ID sequences.

Table 3 compares the TPR performance of the different intrusion detection methods for spoofing attacks. The proposed method also shows an increase in the TPR compared to the other methods. For example, at an FPR of 0.5%, the TPR performance of the proposed method is improved by approximately 207.4% compared to that of the bi-directional Markov method.

[Table 3]

|  | Bi-Markov | GPT2 | Bi-LSTM | Proposed |
|---|---|---|---|---|
| TPR at FPR of 5% | 0.6281 | 0.8459 | 0.9406 | 0.9973 |
| TPR at FPR of 1% | 0.3798 | 0.7003 | 0.7635 | 0.9780 |
| TPR at FPR of 0.5% | 0.3049 | 0.6248 | 0.6497 | 0.9372 |

Table 4 summarizes the performance of the different intrusion detection methods in terms of the false negative rate (FNR) and the F-measure at an FPR of 0.5%.

[Table 4]

| | Bi-Markov | | GPT2 | | Bi-LSTM | | Proposed | |
|---|---|---|---|---|---|---|---|---|
| | FNR | F-measure | FNR | F-measure | FNR | F-measure | FNR | F-measure |
| Flooding | 4.414e-4 | 9.895e-1 | 2.297e-4 | 9.896e-1 | 1.847e-4 | 9.896e-1 | 7.882e-5 | 9.897e-1 |
| Spoofing | 6.951e-1 | 4.565e-1 | 3.752e-1 | 7.547e-1 | 3.503e-1 | 7.731e-1 | 6.276e-2 | 9.524e-1 |
| Replay | 3.241e-3 | 9.848e-1 | 1.456e-3 | 9.857e-1 | 1.316e-3 | 9.857e-1 | 7.057e-4 | 9.860e-1 |
| Fuzzing | 1.463e-3 | 9.875e-1 | 4.912e-4 | 9.880e-1 | 2.766e-4 | 9.881e-1 | 1.189e-4 | 9.881e-1 |

Here, the FNR is the ratio of the number of attacks falsely determined to be normal to the total number of actual attacks, and a lower FNR value corresponds to better performance. It can be seen that the FNR performance against the spoofing attacks is reduced from a minimum of about 9% to a maximum of about 17.9% compared to other comparative methods. In the case of F-measure, it can be seen that the performance is improved from a minimum of about 23.2% to a maximum of about 108.6% for the spoofing attacks.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An intrusion detection method for a controller area network, CAN, performed by a processor (1010), the intrusion detection method comprising:

   collecting CAN identifiers, IDs, from the CAN in an order of occurrence;
   generating a sequence of a predetermined number $L$ of CAN IDs from the collected CAN IDs, $L$ being an integer greater than or equal to 1;
   inputting the sequence into a bi-directional generative pretrained transformer 2, GPT2, network and calculating a value of a loss function corresponding to the sequence;
   comparing the value of the loss function to a threshold; and
   when the value of the loss function is equal to or greater than the threshold, determining a period corresponding to the sequence as a period in which an intrusion exists,
   wherein when a number of allowed CAN IDs is $K$, the allowed CAN IDs in the sequence are sorted in an order of magnitude and converted into values 0 to $K$ - 1, CAN IDs that are not allowed in the sequence are converted to $K$, the sequence is input to the bidirectional GPT2 network (S910), and $K$ is an integer equal to or greater than 1, and

   wherein the loss function is defined as $\mathrm{NLL}^{(m)} = -\dfrac{1}{L} \sum_{l=0}^{L-1} \log \hat{\mathbb{P}} \left( x_l^{(m)} = y_l^{(m)} \right)$, $x_l^{(m)}$ is an $l$-th variable of an m-th CAN ID sequence corresponding to a detection target sequence, and $y_l^{(m)}$ is an actual generated CAN ID for $x_l^{(m)}$, which is a ground truth value.

2. The intrusion detection method according to claim 1, wherein the bi-directional GPT2 network (S910) includes a forward GPT module (610), a backward GPT module (620), and a fully-connected layer (640).

3. The intrusion detection method according to claim 2, wherein in the calculating of the value of the loss function, the sequence is input to the forward GPT module (610) in an original order, and the sequence is input to the backward GPT module (620) in a reverse order.

4. The intrusion detection method according to claim 3, wherein in the calculating of the value of the loss function, embedding vectors corresponding to CAN IDs from 0-th CAN ID to (L-2)-th CAN ID belonging to the sequence are input to the forward GPT module (610), and the forward GPT module (610) outputs E-dimensional vectors having a same dimensionality as the embedding vectors, which correspond to 1st to (L-1)-th CAN IDs.

5. The intrusion detection method according to claim 3, wherein in the calculating of the value of the loss function, embedding vectors corresponding to CAN IDs from (L-1)-th CAN ID to 1st CAN ID belonging to the sequence are input to the backward GPT module (620), and the backward GPT module (620) outputs E-dimensional vectors having a same dimensionality as the embedding vectors, which correspond to (L-2)-th to 0-th CAN IDs.

6. The intrusion detection method according to claim 4, wherein in the calculating of the value of the loss function, the output of the forward GPT module (610) and the output of the backward GPT module (620) are concatenated to generate a $2E \times L$ matrix, the $2E \times L$ matrix is converted to a $(K+1) \times L$ matrix by the fully-connected layer (640), and the $(K+1) \times L$ matrix is transformed into a probability matrix (S860) by a softmax layer (S850).

7. The intrusion detection method according to claim 2, wherein the loss function is defined as

$$\text{NLL} = -\frac{1}{NL} \sum_{n=0}^{N-1} \sum_{l=0}^{L-1} \log \hat{\mathbb{P}} \left( x_l^{(n)} = y_l^{(n)} \,\Bigg|\, \left\{ x_{l'}^{(n)} \right\}_{l'=0,l'\neq l}^{(L-1)} \right)$$, the forward

GPT module (610), the backward GPT module (620), and the fully-connected layer (640) are trained to minimize the value of the loss function, $x_l^{(n)}$ is an $l$-th variable of an n-th normal CAN ID sequence used for training, and $y_l^{(n)}$ is an actual generated CAN ID for $x_l^{(n)}$, which is a ground truth value.

8. An intrusion detection apparatus (1000) for a controller area network, CAN, the intrusion detection apparatus (1000) comprising:

a processor (1010);
a memory (1020) storing one or more instructions executable by the processor (1010), and
a transceiver (1030) connected to a bus (1070) of the CAN to perform communications,
wherein when executed by the processor (1010), the one or more instructions cause the intrusion detection apparatus (1000) to:

collect CAN identifiers, IDs, from the CAN in an order of occurrence;
generate a sequence of a predetermined number $L$ of CAN IDs from the collected CAN IDs, $L$ being an integer greater than or equal to 1;
input the sequence into a bi-directional generative pretrained transformer 2, GPT2, network and calculate a value of a loss function corresponding to the sequence;
compare the value of the loss function to a threshold; and
when the value of the loss function is equal to or greater than the threshold, determine a period corresponding to the sequence as a period in which an intrusion exists,
wherein when a number of allowed CAN IDs is $K$, the allowed CAN IDs in the sequence are sorted in an order of magnitude and converted into values 0 to $K-1$, CAN IDs that are not allowed in the sequence are converted to $K$, the sequence is input to the bidirectional GPT2 network (S910), and $K$ is an integer equal to or greater than 1, and

wherein the loss function is defined as $$\text{NLL}^{(m)} = -\frac{1}{L} \sum_{l=0}^{L-1} \log \hat{\mathbb{P}} \left( x_l^{(m)} = y_l^{(m)} \right)$$, $x_l^{(m)}$ is an $l$-

th variable of an m-th CAN ID sequence corresponding to a detection target sequence, and $y_l^{(m)}$ is an actual generated CAN ID for $x_l^{(m)}$, which is a ground truth value.

9. The intrusion detection apparatus (1000) according to claim 8, wherein the bi-directional GPT2 network (S910) includes a forward GPT module (610), a backward GPT module (620), and a fully-connected layer (640).

10. The intrusion detection apparatus (1000) according to claim 9, wherein in the calculating of the value of the loss function, the sequence is input to the forward GPT module (610) in an original order, and the sequence is input to the backward GPT module (620) in a reverse order.

11. The intrusion detection apparatus (1000) according to claim 10, wherein in the calculating of the value of the loss function, embedding vectors corresponding to CAN IDs from 0-th CAN ID to (L-2)-th CAN ID belonging to the sequence are input to the forward GPT module (610), and the forward GPT module (610) outputs E-dimensional vectors having a same dimensionality as the embedding vectors, which correspond to $1^{st}$ to (L-1)-th CAN IDs.

12. The intrusion detection apparatus (1000) according to claim 10, wherein in the calculating of the value of the loss function, embedding vectors corresponding to CAN IDs from (L-1)-th CAN ID to $1^{st}$ CAN ID belonging to the sequence are input to the backward GPT module (620), and the backward GPT module (620) outputs E-dimensional vectors having a same dimensionality as the embedding vectors, which correspond to (L-2)-th to 0-th CAN IDs.

13. The intrusion detection apparatus (1000) according to claim 10, wherein in the calculating of the value of the loss function, the output of the forward GPT module (610) and the output of the backward GPT module (620) are concatenated to generate a $2E \times L$ matrix, the $2E \times L$ matrix is converted to a $(K+1) \times L$ matrix by the fully-connected layer (640), and the $(K+1) \times L$ matrix is transformed into a probability matrix (S860) by a softmax layer (S850).

14. The intrusion detection apparatus (1000) according to claim 9, wherein:
the loss function is defined as

$$\mathrm{NLL} = -\frac{1}{NL} \sum_{n=0}^{N-1} \sum_{l=0}^{L-1} \log \hat{\mathbb{P}} \left( x_l^{(n)} = y_l^{(n)} \,\middle|\, \left\{ x_{l'}^{(n)} \right\}_{l'=0, l' \neq l}^{(L-1)} \right) \text{, the}$$

forward GPT module (610), the backward GPT module (620), and the fully-connected layer (640) are trained to minimize the value of the loss function, $x_l^{(n)}$ is an $l$-th variable of an $n$-th normal CAN ID sequence used for training, and $y_l^{(n)}$ is an actual generated CAN ID for $x_l^{(n)}$, which is a ground truth value.

## Patentansprüche

1. Eindringdetektionsverfahren für ein Steuerungsbereichsnetz, CAN, das von einem Prozessor (1010) durchgeführt wird, wobei das Eindringdetektionsverfahren folgende Schritte aufweist:

Sammeln von CAN-Kennungen, IDs, aus dem CAN in einer Reihenfolge des Auftretens;
Erzeugen einer Sequenz einer vorbestimmten Anzahl $L$ von CAN-IDs aus den gesammelten CAN-IDs, wobei $L$ eine Ganzzahl größer oder gleich 1 ist;
Eingeben der Sequenz in ein bidirektionales generatives vortrainiertes Transformator-2-, GPT2-, Netz und Berechnen eines Wertes einer Verlustfunktion, die der Sequenz entspricht;
Vergleichen des Wertes der Verlustfunktion mit einer Schwelle; und
wenn der Wert der Verlustfunktion gleich oder größer als die Schwelle ist, Bestimmen einer Periode, die der Sequenz entspricht, als eine Periode, in der ein Eindringen vorliegt,
wobei, wenn eine Anzahl von zulässigen CAN-IDs $K$ ist, die zulässigen CAN-IDs in der Sequenz in einer Größenordnung sortiert und in Werte 0 bis $K-1$ umgewandelt werden, CAN-IDs, die in der Sequenz nicht zulässig sind, in $K$ umgewandelt werden, die Sequenz in das bidirektionale GPT2-Netz eingegeben wird (S910) und $K$ eine Ganzzahl gleich oder größer als 1 ist, und

wobei die Verlustfunktion definiert ist als $\text{NLL}^{(m)} = -\frac{1}{L} \sum_{l=0}^{L-1} \log \hat{\mathbb{P}}\left(x_l^{(m)} = y_l^{(m)}\right)$, $x_l^{(m)}$ eine $l$-te

Variable einer $m$-ten CAN-ID-Sequenz ist, die einer Detektionszielsequenz entspricht, und $y_l^{(m)}$ eine

tatsächliche erzeugte CAN-ID für $x_l^{(m)}$ ist, die ein Ground-Truth-Wert ist.

2. Eindringdetektionsverfahren gemäß Anspruch 1, wobei das bidirektionale GPT2-Netz (S910) ein Vorwärts-GPT-Modul (610), ein Rückwärts-GPT-Modul (620) und eine vollständig verbundene Schicht (640) aufweist.

3. Eindringdetektionsverfahren gemäß Anspruch 2, wobei bei der Berechnung des Wertes der Verlustfunktion die Sequenz in das Vorwärts-GPT-Modul (610) in einer ursprünglichen Reihenfolge eingegeben wird und die Sequenz in das Rückwärts-GPT-Modul (620) in einer umgekehrten Reihenfolge eingegeben wird.

4. Eindringdetektionsverfahren gemäß Anspruch 3, wobei bei der Berechnung des Wertes der Verlustfunktion Einbettungsvektoren, die CAN-IDs von der 0-ten CAN-ID bis zur (L-2)-ten CAN-ID, die zu der Sequenz gehören, entsprechen, in das Vorwärts-GPT-Modul (610) eingegeben werden und das Vorwärts-GPT-Modul (610) E-dimensionale Vektoren mit einer gleichen Dimensionalität wie die Einbettungsvektoren ausgibt, die der 1. bis (L-1)-ten CAN-ID entsprechen.

5. Eindringdetektionsverfahren gemäß Anspruch 3, wobei bei der Berechnung des Wertes der Verlustfunktion Einbettungsvektoren, die CAN-IDs von der (L-1)-ten CAN-ID bis zur 1. CAN-ID, die zu der Sequenz gehören, entsprechen, in das Rückwärts-GPT-Modul (620) eingegeben werden und das Rückwärts-GPT-Modul (620) E-dimensionale Vektoren mit einer gleichen Dimensionalität wie die Einbettungsvektoren ausgibt, die der (L-2)-ten bis 0-ten CAN-ID entsprechen.

6. Eindringdetektionsverfahren gemäß Anspruch 4, wobei bei der Berechnung des Wertes der Verlustfunktion die Ausgabe des Vorwärts-GPT-Moduls (610) und die Ausgabe des Rückwärts-GPT-Moduls (620) verkettet werden, um eine $2E \times L$-Matrix zu erzeugen, die $2E \times L$-Matrix durch die vollständig verbundene Schicht (640) in eine $(K+1) \times L$-Matrix umgewandelt wird und die $(K+1) \times L$-Matrix durch eine Softmax-Schicht (S850) in eine Wahrscheinlichkeitsmatrix (S860) transformiert wird.

7. Eindringdetektionsverfahren gemäß Anspruch 2, wobei die Verlustfunktion definiert ist als

$$\text{NLL} = -\frac{1}{NL} \sum_{n=0}^{N-1} \sum_{l=0}^{L-1} \log \hat{\mathbb{P}}\left(x_l^{(n)} = y_l^{(n)} \,\middle|\, \left\{x_{l'}^{(n)}\right\}_{l'=0, l' \neq l}^{(L-1)}\right),$$

das Vorwärts-GPT-Modul (610), das Rückwärts-GPT-Modul (620) und die vollständig verbundene Schicht (640) trainiert werden, um den Wert der Verlustfunktion zu minimieren, $x_l^{(n)}$ eine $l$-te Variable einer $n$-ten normalen CAN-ID-Sequenz ist, die zum Training verwendet wird, und $y_l^{(n)}$ eine tatsächliche erzeugte CAN-ID für $x_l^{(n)}$ ist, die ein Ground-Truth-Wert ist.

8. Eindringdetektionsvorrichtung (1000) für ein Controller Area Network, CAN, wobei die Eindringdetektionsvorrichtung (1000) folgende Merkmale aufweist:

einen Prozessor (1010);
einen Speicher (1020), der eine oder mehr Anweisungen speichert, die von dem Prozessor (1010) ausführbar sind; und
einen Transceiver (1030), der mit einem Bus (1070) des CAN verbunden ist, um Kommunikationen durchzuführen,
wobei bei Ausführung von dem Prozessor (1010) die eine oder mehr Anweisungen die Eindringdetektionsvorrichtung (1000) zu Folgendem veranlassen:

Sammeln von CAN-Kennungen, IDs, aus dem CAN in einer Reihenfolge des Auftretens;
Erzeugen einer Sequenz einer vorbestimmten Anzahl $L$ von CAN-IDs aus den gesammelten CAN-IDs, wobei $L$ eine Ganzzahl größer oder gleich 1 ist;
Eingeben der Sequenz in ein bidirektionales generatives vortrainiertes Transformator-2-, GPT2-, Netz und Berechnen eines Wertes einer Verlustfunktion, die der Sequenz entspricht;
Vergleichen des Wertes der Verlustfunktion mit einer Schwelle; und
wenn der Wert der Verlustfunktion gleich oder größer als die Schwelle ist, Bestimmen einer Periode, die der Sequenz entspricht, als eine Periode, in der ein Eindringen vorliegt,
wobei, wenn eine Anzahl von zulässigen CAN-IDs $K$ ist, die zulässigen CAN-IDs in der Sequenz in einer Größenordnung sortiert und in Werte 0 bis $K$ - 1 umgewandelt werden, CAN-IDs, die in der Sequenz nicht zulässig sind, in $K$ umgewandelt werden, die Sequenz in das bidirektionale GPT2-Netz eingegeben wird (S910) und $K$ eine Ganzzahl gleich oder größer als 1 ist, und

wobei die Verlustfunktion definiert ist als
$$\mathrm{NLL}^{(m)} = -\frac{1}{L} \sum_{l=0}^{L-1} \log \hat{\mathbb{P}} \left( x_l^{(m)} = y_l^{(m)} \right)$$
, $x_l^{(m)}$ eine $l$-te Variable einer $m$-ten CAN-ID-Sequenz ist, die einer Detektionszielsequenz entspricht, und $y_l^{(m)}$ eine tatsächliche erzeugte CAN-ID für $x_l^{(m)}$ ist, die ein Ground-Truth-Wert ist.

9. Eindringdetektionsvorrichtung (1000) gemäß Anspruch 8, wobei das bidirektionale GPT2-Netz (S910) ein Vorwärts-GPT-Modul (610), ein Rückwärts-GPT-Modul (620) und eine vollständig verbundene Schicht (640) aufweist.

10. Eindringdetektionsvorrichtung (1000) gemäß Anspruch 9, wobei bei der Berechnung des Wertes der Verlustfunktion die Sequenz in das Vorwärts-GPT-Modul (610) in einer ursprünglichen Reihenfolge eingegeben wird und die Sequenz in das Rückwärts-GPT-Modul (620) in einer umgekehrten Reihenfolge eingegeben wird.

11. Eindringdetektionsvorrichtung (1000) gemäß Anspruch 10, wobei bei der Berechnung des Wertes der Verlustfunktion Einbettungsvektoren, die CAN-IDs von der 0-ten CAN-ID bis zur (L-2)-ten CAN-ID, die zu der Sequenz gehören, entsprechen, in das Vorwärts-GPT-Modul (610) eingegeben werden und das Vorwärts-GPT-Modul (610) E-dimensionale Vektoren mit einer gleichen Dimensionalität wie die Einbettungsvektoren ausgibt, die der 1. bis (L-1)-ten CAN-ID entsprechen.

12. Eindringdetektionsvorrichtung (1000) gemäß Anspruch 10, wobei bei der Berechnung des Wertes der Verlustfunktion Einbettungsvektoren, die CAN-IDs von der (L-1)-ten CAN-ID bis zur 1. CAN-ID, die zu der Sequenz gehören, entsprechen, in das Rückwärts-GPT-Modul (620) eingegeben werden und das Rückwärts-GPT-Modul (620) E-dimensionale Vektoren mit einer gleichen Dimensionalität wie die Einbettungsvektoren ausgibt, die der (L-2)-ten bis 0-ten CAN-ID entsprechen.

13. Eindringdetektionsvorrichtung (1000) gemäß Anspruch 10, wobei bei der Berechnung des Wertes der Verlustfunktion die Ausgabe des Vorwärts-GPT-Moduls (610) und die Ausgabe des Rückwärts-GPT-Moduls (620) verkettet werden, um eine $2E \times L$-Matrix zu erzeugen, die $2E \times L$-Matrix durch die vollständig verbundene Schicht (640) in eine $(K + 1) \times L$-Matrix umgewandelt wird und die $(K + 1) \times L$-Matrix durch eine Softmax-Schicht (S850) in eine Wahrscheinlichkeitsmatrix (S860) transformiert wird.

14. Eindringdetektionsvorrichtung (1000) gemäß Anspruch 9, wobei:

die Verlustfunktion definiert ist als

$$\mathrm{NLL} = -\frac{1}{NL} \sum_{n=0}^{N-1} \sum_{l=0}^{L-1} \log \hat{\mathbb{P}} \left( x_l^{(n)} = y_l^{(n)} \;\middle|\; \left\{ x_{l'}^{(n)} \right\}_{l'=0,l'\neq l}^{(L-1)} \right)$$
,

das Vorwärts-GPT-Modul (610), das Rückwärts-GPT-Modul (620) und die vollständig verbundene Schicht (640) trainiert werden, um den Wert der Verlustfunktion zu minimieren, $x_l^{(n)}$ eine $l$-te Variable einer $n$-ten normalen CAN-ID-Sequenz ist, die zum Training verwendet wird, und $y_l^{(n)}$ eine tatsächliche erzeugte CAN-ID für $x_l^{(n)}$ ist, die ein Ground-Truth-Wert ist.

## Revendications

1. Procédé de détection d'intrusion pour un réseau de zone de contrôleur, CAN, réalisé par un processeur (1010), le procédé de détection d'intrusion comprenant le fait de :

   collecter des identifiants, ID, de CAN, à partir du CAN dans un ordre d'apparition ;
   générer une séquence d'un nombre prédéterminé $L$ d'ID de CAN à partir des ID de CAN collectés, $L$ étant un nombre entier supérieur ou égal à 1 ;
   entrer la séquence dans un réseau de transformateur préformé génératif 2, GPT2, bidirectionnel et calculer une valeur d'une fonction de perte correspondant à la séquence ;
   comparer la valeur de la fonction de perte à un seuil ; et
   lorsque la valeur de la fonction de perte est supérieure ou égale au seuil, déterminer une période correspondant à la séquence en tant que période dans laquelle existe une intrusion,
   dans lequel, lorsqu'un nombre d'ID de CAN autorisé est $K$, les ID de CAN autorisés dans la séquence sont triés dans un ordre d'amplitude et converti en valeurs 0 à $K$ - 1, les ID de CAN qui ne sont pas autorisés dans la séquence sont convertis en $K$, la séquence est entrée dans le réseau GPT2 bidirectionnel (S910), et $K$ est un nombre entier supérieur ou égal à 1, et

   dans lequel la fonction de perte est définie par $$\mathrm{NLL}^{(m)} = -\frac{1}{L}\sum_{l=0}^{L-1}\log\hat{\mathbb{P}}\left(x_l^{(m)} = y_l^{(m)}\right)$$ , $xl^{(m)}$

   est une $l$-ème variable d'une $m$-ème séquence d'ID de CAN correspondant à une séquence cible de détection, et $yl^{(m)}$ est un ID de CAN généré réel pour $xl^{(m)}$, qui est une valeur de réalité de terrain.

2. Procédé de détection d'intrusion selon la revendication 1, dans lequel le réseau GPT2 bidirectionnel (S910) inclut un module GPT vers l'avant (610), un module GPT vers l'arrière (620) et une couche totalement connectée (640).

3. Procédé de détection d'intrusion selon la revendication 2, dans lequel, lors du calcul de la valeur de la fonction de perte, la séquence est entrée dans le module GPT vers l'avant (610) dans un ordre d'origine, et la séquence est entrée dans le module GPT vers l'arrière (620) dans un ordre inverse.

4. Procédé de détection d'intrusion selon la revendication 3, dans lequel, lors du calcul de la valeur de la fonction de perte, des vecteurs d'incorporation correspondant aux ID de CAN du 0-ème ID de CAN au (L-2)-ème ID de CAN appartenant à la séquence sont entrés dans le module GPT vers l'avant (610), et le module GPT vers l'avant (610) délivre en sortie des vecteurs E-dimensionnels présentant une même dimensionnalité que les vecteurs d'incorporation, qui correspondent aux 1er à (L-1)-ème ID de CAN.

5. Procédé de détection d'intrusion selon la revendication 3, dans lequel, lors du calcul de la valeur de la fonction de perte, des vecteurs d'incorporation correspondant aux ID de CAN du (L-1)-ème ID de CAN au 1er ID de CAN appartenant à la séquence sont entrés dans le module GPT vers l'arrière (620), et le module GPT vers l'arrière (620) délivre en sortie des vecteurs E-dimensionnels présentant une même dimensionnalité que les vecteurs d'incorporation, qui correspondent aux (L-2)-ème à 0-ème ID de CAN.

6. Procédé de détection d'intrusion selon la revendication 4, dans lequel, lors du calcul de la valeur de la fonction de perte, la sortie du module GPT vers l'avant (610) et la sortie du module GPT vers l'arrière (620) sont concaténées pour générer une matrice $2E \times L$, la matrice $2E \times L$ est convertie en une matrice $(K + 1) \times L$ par la couche totalement connectée (640), et la matrice $(K + 1) \times L$ est transformée en une matrice de probabilité (S860) par une couche softmax (S850).

7. Procédé de détection d'intrusion selon la revendication 2, dans lequel la fonction de perte est définie par

$$NLL = -\frac{1}{NL} \sum_{n=0}^{N-1} \sum_{l=0}^{L-1} \log \hat{\mathbb{P}} \left( x_l^{(n)} = y_l^{(n)} \,\middle|\, \left\{ x_{l'}^{(n)} \right\}_{l'=0, l' \neq l}^{(L-1)} \right)$$ , le module GPT vers l'avant (610), le module GPT vers l'arrière (620) et la couche totalement connectée (640) sont formés pour minimiser la valeur de la fonction de perte, $xl^{(n)}$ est une $l$-ème variable d'une $n$-ème séquence d'ID de CAN normale utilisée pour formation, et $yl^{(n)}$ est un ID de CAN généré actuel pour $xl^{(n)}$, qui est une valeur de réalité de terrain.

8. Appareil de détection d'intrusion (1000) pour un réseau de zone de contrôleur, CAN, l'appareil de détection d'intrusion (1000) comprenant :

un processeur (1010) ;
une mémoire (1020) stockant une ou plusieurs instructions exécutables par le processeur (1010), et
un émetteur-récepteur (1030) connecté à un bus (1070) du CAN pour effectuer des communications,
dans lequel, lorsqu'elles sont exécutées par le processeur (1010), les une ou plusieurs instructions amènent l'appareil de détection d'intrusion (1000) à :

collecter des identifiants, ID, de CAN, à partir du CAN dans un ordre d'apparition ;
générer une séquence d'un nombre prédéterminé $L$ d'ID de CAN à partir des ID de CAN collectés, $L$ étant un nombre entier supérieur ou égal à 1 ;
entrer la séquence dans un réseau de transformateur préformé génératif 2, GPT2, bidirectionnel et calculer une valeur d'une fonction de perte correspondant à la séquence ;
comparer la valeur de la fonction de perte à un seuil ; et
lorsque la valeur de la fonction de perte est supérieure ou égale au seuil, déterminer une période correspondant à la séquence en tant que période dans laquelle existe une intrusion,
dans lequel, lorsqu'un nombre d'ID de CAN autorisé est $K$, les ID de CAN autorisés dans la séquence sont triés dans un ordre d'amplitude et converti en valeurs 0 à $K$ - 1, les ID de CAN qui ne sont pas autorisés dans la séquence sont convertis en $K$, la séquence est entrée dans le réseau GPT2 bidirectionnel (S910), et $K$ est un nombre entier supérieur ou égal à 1, et

dans lequel la fonction de perte est définie par $$NLL^{(m)} = -\frac{1}{L} \sum_{l=0}^{L-1} \log \hat{\mathbb{P}} \left( x_l^{(m)} = y_l^{(m)} \right)$$ ,

$xl^{(m)}$ est une $l$-ème variable d'une $m$-ème séquence d'ID de CAN correspondant à une séquence cible de détection, et $yl^{(m)}$ est un ID de CAN généré réel pour $xl^{(m)}$, qui est une valeur de réalité de terrain.

9. Appareil de détection d'intrusion (1000) selon la revendication 8, dans lequel le réseau GPT2 bidirectionnel (S910) inclut un module GPT vers l'avant (610), un module GPT vers l'arrière (620) et une couche totalement connectée (640).

10. Appareil de détection d'intrusion (1000) selon la revendication 9, dans lequel, lors du calcul de la valeur de la fonction de perte, la séquence est entrée dans le module GPT vers l'avant (610) dans un ordre d'origine, et la séquence est entrée dans le module GPT vers l'arrière (620) dans un ordre inverse.

11. Appareil de détection d'intrusion (1000) selon la revendication 10, dans lequel, lors du calcul de la valeur de la fonction de perte, des vecteurs d'incorporation correspondant aux ID de CAN du 0-ème ID de CAN au (L-2)-ème ID de CAN appartenant à la séquence sont entrés dans le module GPT vers l'avant (610), et le module GPT vers l'avant (610) délivre en sortie des vecteurs E-dimensionnels présentant une même dimensionnalité que les vecteurs d'incorporation, qui correspondent aux 1er à (L-1)-ème ID de CAN.

12. Appareil de détection d'intrusion (1000) selon la revendication 10, dans lequel, lors du calcul de la valeur de la fonction de perte, des vecteurs d'incorporation correspondant aux ID de CAN du (L-1)-ème ID de CAN au 1er ID de CAN appartenant à la séquence sont entrés dans le module GPT vers l'arrière (620), et le module GPT vers l'arrière (620) délivre en sortie des vecteurs E-dimensionnels présentant une même dimensionnalité que les vecteurs d'incorporation, qui correspondent aux (L-2)-ème à 0-ème ID de CAN.

13. Appareil de détection d'intrusion (1000) selon la revendication 10, dans lequel, lors du calcul de la valeur de la fonction de perte, la sortie du module GPT vers l'avant (610) et la sortie du module GPT vers l'arrière (620) sont concaténées pour générer une matrice $2E \times L$, la matrice $2E \times L$ est convertie en une matrice $(K + 1) \times L$ par la couche totalement connectée (640), et la matrice ($K$ + 1) x $L$ est transformée en une matrice de probabilité (S860) par une couche softmax (S850).

14. Appareil de détection d'intrusion (1000) selon la revendication 9, dans lequel :

la fonction de perte est définie par $\text{NLL} = -\dfrac{1}{NL}\sum_{n=0}^{N-1}\sum_{l=0}^{L-1}\log \hat{\mathbb{P}}\left(x_l^{(n)} = y_l^{(n)} \middle| \left\{x_{l'}^{(n)}\right\}_{l'=0,l'\neq l}^{(L-1)}\right)$, le

module GPT vers l'avant (610), le module GPT vers l'arrière (620) et la couche totalement connectée (640) sont formés pour minimiser la valeur de la fonction de perte, $xl^{(n)}$ est une $l$-ème variable d'une $n$-ème séquence d'ID de CAN normale utilisée pour formation, et $yl^{(n)}$ est un ID de CAN généré actuel pour $xl^{(n)}$, qui est une valeur de réalité de terrain.

# FIG. 1

| S O F | Arbitration Field |     | Control Field |     |     | Data Field | CRC Field |     | ACK Field |     | EOF Field | INTER-FRAME |
|---|---|---|---|---|---|---|---|---|---|---|---|---|
|  | ID | R T R | I D E | R 0 | D L C | PAYLOAD | C R C | DELIMITER | A C K | DELIMITER | E O F |  |

11 bits — 11 bits — Up to 8 bytes — 15 bits — 7 bits

21

EP 4 106 269 B1

# FIG. 2

Intrusion from outside

External
networks

Body
contorller

CAN high

CAN low

External
devices

External
networks

# FIG. 3

[raw CAN data]

| 2a0 |
| 4b1 |
| 18f |
| ... |

convert to
one-hot vector
shape

[one-hot vector shape]

1 2 3 4 5 6 7 8 9 0 a b c d e f

2

a

0

convert to
can data
to images

[normal CAN data image]

1 2 3 4 5 6 7 8 9 0 a b c d e f

2
a
0

...

FIG. 4

Output: Probabilities over tokens

Softmax

$h_L W_e^T$

Transposed embedding $W_e^T$

$h_L$

Add & Layer norm

Pointwise feed forward

Add & Layer norm

Masked multi-headed self-attention

$xW_e + W_p$

Embedding matrix $W_e$

Input: x

$T_1$ $T_2$ ... $T_N$

Trm Trm ... Trm

Trm Trm ... Trm

$E_1$ $E_2$ ... $E_N$

# FIG. 5

# FIG. 6

$$\begin{bmatrix} P(x_0=0) & P(x_1=0) & P(x_2=0) & \cdots & P(x_{(L-2)}=0) & P(x_{(L-2)}=0) \\ P(x_0=1) & & & & & \\ \vdots & & & \ddots & & \vdots \\ P(x_0=K) & & & \cdots & & P(x_{(L-1)}=K) \end{bmatrix}$$

| 650 | Softmax |
|---|---|

| 640 | Linear |
|---|---|

$$\begin{bmatrix} 0 & f_{x_1} & f_{x_2} & \cdots & f_{x_{(L-2)}} & f_{x_{(L-1)}} \\ b_{x_0} & b_{x_1} & f_{x_2} & \cdots & b_{x_{(L-2)}} & 0 \end{bmatrix}$$

| 630 | Concatenate |
|---|---|

$[f_{x_1} \; f_{x_2} \; \cdots \; f_{x_{(L-1)}}]$     $[b_{x_{(L-2)}} \; b_{x_{(L-3)}} \; \cdots \; b_{x_0}]$

| 610 | Forward GPT2 | | Backward GPT2 | 620 |
|---|---|---|---|---|

$[x_0 \; x_1 \; \cdots \; x_{(L-2)}]$     $[x_{(L-1)} \; x_{(L-2)} \; \cdots \; x_1]$

# FIG. 7

```
                    ( start )
                        |
                        v
    +---------------------------------------+
    |          collect CAN IDs              |---S710
    +---------------------------------------+
                        |
                        v
    +---------------------------------------+
    |        generate a sequence of a       |
    |   predetermined number L of CAN IDs   |---S720
    +---------------------------------------+
                        |
                        v
    +---------------------------------------+
    |   input the sequence into a bi-directional   |
    |   GPT2 network and calculate a value of a    |---S730
    |  loss function corresponding to the sequence |
    +---------------------------------------+
                        |
                        v
    +---------------------------------------+
    |     train the GPT2 network so that the      |
    |   value of the loss function is minimized   |---S740
    +---------------------------------------+
                        |
                        v
                    ( end )
```

# FIG. 8

```
                        ( start )
                            │
                            ▼
┌─────────────────────────────────────────────────┐
│   input the sequence to a forward GPT module in an │
│        original order, and input the sequence to   │──── S810
│        a backward GPT module in a reverse order    │
└─────────────────────────────────────────────────┘
                            │
                            ▼
┌─────────────────────────────────────────────────┐
│ input embedding vectors corresponding to CAN IDs from 0-th │
│ CAN ID to (L-2)-th CAN ID belonging to the sequence to the │──── S820
│ forward GPT module, and output E-dimensional vectors having │
│      a same dimensionality as the embedding vectors,       │
│        which correspond to 1st to (L-1)-th CAN IDs         │
└─────────────────────────────────────────────────┘
                            │
                            ▼
┌─────────────────────────────────────────────────┐
│    input embedding vectors corresponding to CAN IDs from    │
│ (L-1)-th CAN ID to 1st CAN ID belonging to the sequence to  │──── S830
│ the backward GPT module, and output E-dimensional vectors   │
│    having a same dimensionality as the embedding vectors,   │
│        which correspond to (L-2)-th to 0-th CAN IDs         │
└─────────────────────────────────────────────────┘
                            │
                            ▼
┌─────────────────────────────────────────────────┐
│      concatenate the output of the forward GPT module       │
│        and the output of the backward GPT module to         │──── S840
│          generate a 2E×L matrix, the 2E×L matrix           │
└─────────────────────────────────────────────────┘
                            │
                            ▼
┌─────────────────────────────────────────────────┐
│    convert the generated matrix to a (K+1)×L matrix by      │
│         using a fully-connected layer, and output           │──── S850
│        a probability matrix by using a softmax layer        │
└─────────────────────────────────────────────────┘
                            │
                            ▼
┌─────────────────────────────────────────────────┐
│           calculate a value of a loss function              │──── S860
└─────────────────────────────────────────────────┘
                            │
                            ▼
                        ( end )
```

## FIG. 9

```
        ( start )
            │
            ▼
┌─────────────────────────────────────┐
│ generate a m-th CAN ID sequence of a │
│ predetermined number L of CAN IDs,   │── S910
│ and input the sequence to the        │
│ trained bi-directional GPT2 network  │
└─────────────────────────────────────┘
            │
            ▼
┌─────────────────────────────────────┐
│  calculate a value of a loss         │
│  function by using the trained       │── S920
│  bi-directional GPT2 network         │
└─────────────────────────────────────┘
            │
            ▼
┌─────────────────────────────────────┐
│  compare the value of the loss       │
│  function (i.e., anomaly score) with │── S930
│  a threshold to determine whether    │
│  the input sequence is normal        │
└─────────────────────────────────────┘
            │
            ▼
         ( end )
```

## FIG. 10

1000

```
┌──────────────────────────────────────────────────────────────┐
│   1020              1010                                       │
│                                          ┌───────────┐         │
│   ┌──────────┐    ┌───────────┐          │   input   │── 1040  │
│   │  memory  │    │           │          │ interface │         │
│   │┌────┐┌───┐│   │ processor │          │  device   │         │
│   ││ROM ││RAM││   │           │          └───────────┘         │
│   │└────┘└───┘│   └───────────┘          ┌───────────┐         │
│   └──────────┘                           │  output   │── 1050  │
│        │         1070    │               │ interface │         │
│        │           │     │               │  device   │         │
│        │           ▼     │               └───────────┘         │
│        ▼                 ▼                                      │
│  ──────┴─────────────────┴─────────────────                    │
│        │                 │                                     │
│        ▼                 ▼                                     │
│   ┌──────────┐      ┌───────────┐                             │
│   │ storage  │──1060│transceiver│── 1030                      │
│   │  device  │      └───────────┘                             │
│   └──────────┘                                                │
└──────────────────────────────────────────────────────────────┘
```

FIG. 11

FIG. 12

FIG. 13

FIG. 14

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210078080

- KR 1020220062705

**Non-patent literature cited in the description**

- **HYUN MIN SONG**. *Self-Supervised Anomaly Detection for In-Vehicle Network Using Noised Pseudo Normal Data*

- **HAIHUA CHEN**. *Data Curation and Quality Assurance for Machine Learning-based Cyber Intrusion Detection*